# EUROPEAN PATENT APPLICATION

(11) **EP 4 831 489 A1**
(43) Date of publication of application: **28.10.2026**
(21) Application number: 24910551.1
(22) Date of filing: 02.12.2024
(51) Int. Cl.: F04D 27/00, F04D 7/00, F04D 25/08, F04D 25/02, F04D 25/00, F24F 7/00, F24F 11/00

(54) **WIND SPEED ADJUSTMENT METHOD AND APPARATUS, READABLE STORAGE MEDIUM, AND FAN DEVICE**

(30) Priority: 28.12.2023 CN 202311840615
(71) Applicant: GD Midea Environment Appliances MFG Co., Ltd., Zhongshan, Guangdong 528425 (CN)
(72) Inventor: WANG, Runfa, Zhongshan, Guangdong 528425 (CN); XIE, Fuxiong, Zhongshan, Guangdong 528425 (CN); ZOU, Dingshan, Zhongshan, Guangdong 528425 (CN); YE, Yongxin, Zhongshan, Guangdong 528425 (CN); WANG, Biao, Zhongshan, Guangdong 528425 (CN); GUO, Xinsheng, Zhongshan, Guangdong 528425 (CN); HAO, Haiyang, Zhongshan, Guangdong 528425 (CN); JIANG, Jianming, Zhongshan, Guangdong 528425 (CN); ZHANG, Zhuangyao, Zhongshan, Guangdong 528425 (CN); MENG, Dongcheng, Zhongshan, Guangdong 528425 (CN); YE, Sijin, Zhongshan, Guangdong 528425 (CN)
(74) Representative: Ran, Handong
(86) International application number: PCT/CN2024/136193
(87) International publication number: WO 2025/139619

(57) **Abstract**

A wind speed adjustment method and apparatus, a readable storage medium, and a fan device (200). The wind speed adjustment method is applied to the fan device (200), and the fan device (200) comprises: a number N of sensors (204) and a fan (208), the N sensors (204) being used to collect N environmental parameters, and N being an integer greater than 1. The wind speed adjustment method comprises: acquiring N environmental parameters; on the basis of the N environmental parameters, determining N operating wind speeds, the N operating wind speeds corresponding one-to-one to the N environmental parameters; on the basis of the N operating wind speeds, determining a target wind speed; and on the basis of the target wind speed, controlling the fan (208) to operate. The fan (208) can take into account the environmental parameters collected by the multiple sensors (204), enabling the fan device (200) to take into consideration control requirements of various different functions, thus ensuring that the fan operates at a relatively good running wind speed.

## Description

### CROSS-REFERENCE TO RELATED APPLICATIONS

The present application claims priority to Chinese Patent Application No. 202311840615.0 filed with the China National Intellectual Property Administration on December 28, 2023 and entitled "WIND SPEED ADJUSTMENT METHOD AND APPARATUS, COMPUTER-READABLE STORAGE MEDIUM, AND FAN DEVICE", the entire contents of which are herein incorporated by reference.

### FIELD

The present application relates to the technical field of fans, and specifically relates to a wind speed adjustment method and apparatus, a computer-readable storage medium, and a fan device.

### BACKGROUND

Fans are essential household appliances for most users. With the development of technology, more and more functions have been integrated into fans, such as a humidification function, an air purification function, and a temperature control function, which have become necessary technical requirements for many high-end fan products.

In the related art, when different functions are activated, the operating speed of the fan is controlled independently, making it impossible to balance multiple different functions simultaneously.

### SUMMARY

The present application aims to at least solve one of the technical problems existing in the prior art or related art.

Therefore, a first aspect of the present application proposes a wind speed adjustment method.

A second aspect of the present application proposes a wind speed adjustment apparatus.

A third aspect of the present application proposes a wind speed adjustment apparatus.

A fourth aspect of the present application proposes a computer-readable storage medium.

A fifth aspect of the present application proposes a fan device.

In view of this, the wind speed adjustment method proposed according to the first aspect of the present application is applied to a fan device; the fan device comprises N sensors and a fan, the N sensors are configured to collect N environmental parameters, and N is an integer greater than 1. The wind speed adjustment method comprises:
obtaining the N environmental parameters;
determining N operating wind speeds based on the N environmental parameters, the N operating wind speeds being in one-to-one correspondence with the N environmental parameters;
determining a target wind speed based on the N operating wind speeds; and
controlling the fan to operate at the target wind speed.

In this technical solution, the N environmental parameters are parameters collected by the N sensors in the fan device. The N sensors are arranged in the fan device, and the N sensors are capable of collecting different environmental parameters. The N sensors are connected to a control system of the fan device, and the control system can read the N environmental parameters collected by the N sensors. Based on the N environmental parameters, N corresponding operating wind speeds can be determined, wherein each environmental parameter corresponds to one operating wind speed. Wind speed levels match an environmental temperature. The wind speed levels are set to 24 wind speed levels, and a temperature range collected by a temperature sensor of the fan device is required to be 0°C to 45°C. The 24 wind speed levels are respectively matched one-to-one with temperature intervals within the range of 0°C to 45°C.

Matching between wind speed levels and humidity indicates that the wind speed levels are set to 24 wind speed levels, a humidity range collected by a humidity sensor of the fan device is required to be 1% to 100%, and the 24 wind speed levels are respectively matched one-to-one with the humidity intervals within the range of 1% to 100%.

Matching between the wind speed levels and PM2.5 data indicates that the wind speed levels are set to 24 wind speed levels, a PM2.5 data range collected by a PM2.5 sensor used in a fan is required to be 1 to 999, and the 24 wind speed levels are respectively matched one-to-one with the PM2.5 data intervals within the range of 1 to 999.

In this technical solution, after determining the N operating wind speeds corresponding to the N environmental parameters, the target wind speed can be determined based on the N operating wind speeds, and the fan is controlled to operate at the target wind speed.

Specifically, the control system of the fan device can obtain multiple different environmental parameters collected by multiple sensors, determine corresponding different operating wind speeds based on the different environmental parameters, and obtain, after determining multiple operating wind speeds, the target wind speed at which the fan operates by synthesizing the multiple operating wind speeds, so that the fan can operate at an optimal operating wind speed.

In the technical solution of the present application, by arranging multiple sensors on the fan device, when the multiple sensors collect multiple different environmental parameters, the operating wind speed corresponding to each environmental parameter can be determined, and the target wind speed of the fan is determined by synthesizing the multiple operating wind speeds. This allows the fan to take into account the environmental parameters collected by the multiple sensors, thereby enabling the fan device to take into account the control needs of multiple different functions and ensuring that the fan operates at a favorable operating wind speed.

In some technical solutions, determining the target wind speed based on the N operating wind speeds comprises:
extracting M first wind speeds from the N operating wind speeds based on a numerical relationship among the N operating wind speeds, wherein M=N-2; and
determining the target wind speed based on the M first wind speeds.

In the technical solutions, after obtaining the N operating wind speeds, numerical comparison is performed on the N operating wind speeds to determine the numerical relationship among the N operating wind speeds. The numerical relationship comprises a magnitude relationship of the N operating wind speeds, etc. Based on this numerical relationship, the M first wind speeds are extracted from the N operating wind speeds, and the final target wind speed is then determined based on the M first wind speeds.

It should be noted that N is a positive integer greater than 3.

Exemplarily, if the number of the operating wind speeds is 5, then the number of first wind speeds is 3. The average value of the 3 first wind speeds is calculated, and a calculation result is determined as the target wind speed.

In the technical solutions of the present application, by extracting the first wind speeds from the multiple operating wind speeds and determining the target wind speed based on the extracted first wind speeds, a wind speed that deviates significantly from the first wind speeds among the multiple operating wind speeds can be removed. This improves matching between the generated target wind speed and the environmental parameters collected by the multiple sensors, and further ensures that the fan device can take into account multiple different environmental parameters when controlling the wind speed.

In some technical solutions, extracting the M first wind speeds from the N operating wind speeds based on the numerical relationship among the N operating wind speeds comprises: determining a maximum wind speed and a minimum wind speed among the N operating wind speeds based on the numerical relationship among the N operating wind speeds; removing the maximum wind speed and the minimum wind speed to obtain the M first wind speeds.

In the technical solutions, through the numerical relationship among the N operating wind speeds, the maximum wind speed and the minimum wind speed among the N operating wind speeds can be determined; the maximum wind speed and the minimum wind speed are then removed from the N operating wind speeds, thereby obtaining the M first wind speeds among the N operating wind speeds.

Exemplarily, a wind speed level matching the environmental temperature is level 10, a wind speed level matching an environmental humidity is level 12, a wind speed level matching a PM2.5 parameter is level 10, a wind speed level matching a PM10 parameter is level 10, and a wind speed level of a carbon dioxide concentration parameter is level 5. The maximum wind speed level 12 and the minimum wind speed level 5 are removed, and the average value of the wind speeds corresponding to the remaining three wind speed levels is calculated to obtain the target wind speed of level 10.

In the technical solutions of the present application, by removing the maximum wind speed and the minimum wind speed from the N operating wind speeds, the accuracy of extracting the M first wind speeds from the N operating wind speeds can be improved, resulting in smaller differences among the extracted M first wind speeds, thereby further enhancing the matching between the target wind speed generated based on the M first wind speeds and the multiple environmental parameters.

In some technical solutions, determining the target wind speed based on the N operating wind speeds comprises:
determining P first parameters among the N environmental parameters, the first parameters being within a preset parameter range, P being a positive integer;
determining Q third wind speeds among the N operating wind speeds based on the N environmental parameters and the P first parameters, wherein Q = N - P; and
determining the target wind speed based on the Q third wind speeds.

In the technical solutions, the first parameters are parameters in the environmental parameters that fall within a preset parameter range. The preset parameter range is a target parameter range set by the user. That is, if the first parameters are within the preset parameter range, it can be determined that no further adjustment is needed for the parameters. Therefore, the P first parameters are removed from the N environmental parameters to obtain the Q third parameters, and the operating wind speeds corresponding to the Q third parameters are determined as Q third wind speeds.

Exemplarily, the N environmental parameters comprise an environmental temperature, an environmental humidity, PM2.5, PM10, and a carbon dioxide concentration. Wherein, if the environmental temperature is within a preset temperature range and the PM2.5 is within a preset PM2.5 range, then the environmental temperature and PM2.5 are removed. The target wind speed is then determined based on the operating wind speeds corresponding to the collected environmental humidity, PM10, and carbon dioxide concentration.

In the technical solutions, after obtaining the Q third wind speeds, an average value of the Q third wind speeds is calculated, and a calculated average wind speed value is determined as the target wind speed.

Exemplarily, the wind speed level matching the environmental temperature is level 10, the wind speed level matching the environmental humidity is level 12, the wind speed level matching the PM2.5 is level 4, the wind speed level matching the PM10 is level 2, and the wind speed level matching the carbon dioxide concentration is level 3. That is, under conditions of good air quality (i.e., the PM2.5, PM10, and carbon dioxide concentration are within respective preset parameter ranges), the system automatically discards the wind speed levels matching air quality data. The wind speed levels matching the environmental temperature and the environmental humidity are determined as the third wind speeds. The average value of two third wind speeds is calculated to obtain the target wind speed of level 11.

In the technical solutions of the present application, the P first parameters among the N environmental parameters that are within the preset parameter range are removed, leaving only the Q third parameters; the target wind speed is generated based on the Q third wind speeds corresponding to the Q third parameters. This allows the fan device to set the target wind speed by synthesizing only the environmental parameters that are not within the preset parameter range, avoiding interference of the environmental parameters already within the preset parameter range with determining the target wind speed, thereby improving the matching of operation at the target wind speed to the environmental parameters that are not within the preset parameter range.

In some technical solutions, determining the target wind speed based on the N operating wind speeds comprises:
obtaining N weight coefficients corresponding to the N environmental parameters; and
performing weighted average value calculation on the N operating wind speeds based on the N weight coefficients to obtain the target wind speed.

In the technical solutions, the N environmental parameters correspond to the N weight coefficients, wherein, the N weight coefficients are associated with an operation mode set by the user or a default operation mode of the control system.

It should be noted that the weight coefficients may be default weight coefficients of the control system, or may be set by the user for different environmental parameters based on actual needs.

Exemplarily, if the user sets a mode to a temperature adjustment mode, the weight coefficient for the environmental temperature is set to be relatively high, while the weight coefficients for other environmental parameters are set to be relatively low.

Exemplarily, if the user sets the mode to a humidity adjustment mode, the weight coefficient for the environmental humidity is set to be relatively high, while the weight coefficients for other environmental parameters are set to be relatively low.

In the technical solutions, after determining the N weight coefficients, weighted average value calculation is performed on the N operating wind speeds through the N weight coefficients, and a calculated result is determined as the target wind speed.

Exemplarily, the value of the weight coefficients ranges from 0 to 99%.

Exemplarily, the wind speed level matching the environmental temperature is level 15, the wind speed level matching the environmental humidity is level 12, the wind speed level matching PM2.5 is level 6, the wind speed level matching PM10 is level 2, and the wind speed level matching the carbon dioxide concentration is level 3. Wherein, the weight coefficient corresponding to the environmental temperature is 30%, the weight coefficient corresponding to the environmental humidity is 20%, the weight coefficient corresponding to the PM2.5 is 25%, the weight coefficient corresponding to the PM10 is 15%, and the weight coefficient corresponding to the carbon dioxide concentration is 10%. The target wind speed is calculated using the following formula (1): 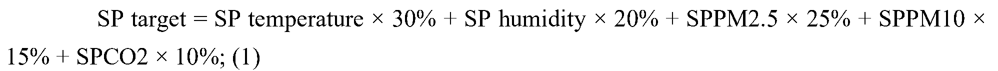
SP target = SP temperature × 30% + SP humidity × 20% + SPPM2.5 × 25% + SPPM10 × 15% + SPCO2 × 10%; (1)
wherein, the SP target is the target wind speed, the SP temperature is the operating wind speed corresponding to environmental temperature, the SP humidity is the operating wind speed corresponding to the environmental humidity, SPPM2.5 is the operating wind speed corresponding to the PM2.5, the SPPM10 is the operating wind speed corresponding to the PM10, and the SPCO₂ is the operating wind speed corresponding to the carbon dioxide concentration.

In the technical solutions of the present application, when the fan operates in a preset operation mode, N weight coefficients correspondingly configured for the N environmental parameters in the preset operation mode are obtained, then weighted average value calculation is performed on the N operating wind speeds through N weight coefficients to calculate the target wind speed, so that the finally obtained target wind speed matches the operation mode in which the fan device is operating.

In some technical solutions, determining the target wind speed based on the N operating wind speeds comprises:
in response to a mode setting instruction, determining X second parameters among the N environmental parameters, X being a positive integer;
determining X fourth wind speeds among the N operating wind speeds based on the X second parameters, and the X fourth wind speeds being in one-to-one correspondence with the X second parameters; and
determining the target wind speed based on the X fourth wind speeds.

In the technical solutions, the mode setting instruction is configured to set the operation mode of the fan device. Different operation modes correspond to different X second parameters among the N environmental parameters. The X fourth wind speeds among the N operating wind speeds can be determined through the X second parameters, and then the target wind speed is generated based on the X fourth wind speeds.

It should be noted that the number of the second parameters corresponding to different operation modes may be the same or different, and the second parameters corresponding to different operation modes may be the same environmental parameters or different environmental parameters.

Exemplarily, the environmental parameters comprise: the environmental temperature, the environmental humidity, the PM2.5, the PM10, and the carbon dioxide concentration. In the temperature and humidity adjustment modes, the X second parameters comprise the environmental humidity and the environmental temperature. In an air purification mode, the X second parameters comprise the PM2.5, the PM10, and the carbon dioxide concentration.

In the technical solutions of the present application, based on the mode setting instruction, the operation mode of the fan device set by the user can be determined, and based on this operation mode, the X second parameters among the N environmental parameters can be determined. The target wind speed is calculated based on the X fourth wind speeds corresponding to the X second parameters, thereby improving the matching with the operation mode set by the user.

In some technical solutions, determining the target wind speed based on the X fourth wind speeds comprises: determining the maximum value or the average value of the X fourth wind speeds as the target wind speed.

In the technical solutions, since the X fourth wind speeds are the operating wind speeds corresponding to the X second parameters, and the X second parameters match the operation mode set by the user, the maximum value or the average value of the X fourth wind speeds can be selected as the target wind speed, thereby improving the matching between the target wind speed and the operation mode.

Exemplarily, the user sets, via an application or a control panel of the fan device, deriving an optimal wind speed level based on air quality data. That is, the control system automatically removes the wind speed level matching the environmental temperature and the wind speed level matching the environmental humidity, and derives the optimal wind speed level through the air quality data. For example, the wind speed level matching the PM2.5 is level 10, the wind speed level matching the PM10 is level 12, and the wind speed level of the carbon dioxide concentration parameter is level 5. For example, the system determines the target wind speed level as level 12, i.e., the highest wind speed level is configured to accelerate air purification. For another example, the system determines the target wind speed level as level 9, i.e., an average level of the wind speed level matching the PM2.5, the wind speed level matching the PM10, and the wind speed level of the carbon dioxide concentration parameter.

In the technical solutions of the present application, by selecting the maximum value or the average value of the X fourth wind speeds as the target wind speed, the matching between the target wind speed and the operation mode is improved.

In some technical solutions, determining the N operating wind speeds based on the N environmental parameters comprises:
obtaining N wind speed mapping relationships corresponding to the N environmental parameters; and
determining the N operating wind speeds based on the N environmental parameters and the N wind speed mapping relationships.

In the technical solutions, different environmental parameters correspond to different wind speed mapping relationships. After obtaining the N environmental parameters, the corresponding N operating wind speeds can be obtained through the N wind speed mapping relationships, thereby determining the operating wind speeds corresponding to the different environmental parameters.

In the technical solutions of the present application, by setting different wind speed mapping relationships for different environmental parameters, the accuracy of the operating wind speed determined for each different environmental parameter, and the disparity among the N operating wind speeds determined by the N environmental parameters can be ensured, thus further improving the matching between the target wind speed and the multiple environmental parameters.

In some technical solutions, the N environmental parameters comprise at least one of the following: the environmental temperature, the environmental humidity, the PM2.5, the PM10, and the carbon dioxide concentration.

In the technical solutions, the N sensors comprise at least one of the following: a temperature sensor, a humidity sensor, a PM2.5 sensor, a PM10 sensor, and a carbon dioxide sensor.

Wherein, the environmental temperature is collected by the temperature sensor, the environmental humidity is collected by the humidity sensor, the PM2.5 is collected by the PM2.5 sensor, the PM10 is collected by the PM10 sensor, and the carbon dioxide concentration is collected by the carbon dioxide sensor.

In the technical solutions of the present application, by collecting the corresponding environmental parameters using the corresponding sensors, the accuracy of the obtained N environmental parameters can be improved, thereby improving the accuracy of determining the target wind speed.

The second aspect of the present application proposes the wind speed adjustment apparatus, which is applied to a fan device. The fan device comprises N sensors and a fan. The N sensors are configured to collect N environmental parameters, and N is an integer greater than 1. The wind speed adjustment apparatus comprises:
an acquisition module for obtaining the N environmental parameters;
a determination module for determining N operating wind speeds based on the N environmental parameters, the N operating wind speeds being in one-to-one correspondence with the N environmental parameters;
the determination module being configured to determine a target wind speed based on the N operating wind speeds; and
a control module for controlling the fan to operate at the target wind speed.

In the technical solutions of the present application, by providing the fan device with multiple sensors, when the multiple sensors collect multiple different environmental parameters, the operating wind speed corresponding to each environmental parameter can be determined, and the target wind speed of the fan is determined by synthesizing multiple operating wind speeds. This allows the fan to take into account the environmental parameters collected by the multiple sensors, thereby enabling the fan device to take into account the control needs of multiple different functions and ensuring that the fan operates at a favorable operating wind speed.

The third aspect of the present application proposes a wind speed adjustment apparatus, comprising: a memory having programs or instructions stored therein; and a processor, the processor executing the programs or instructions stored in the memory to implement the steps of the wind speed adjustment method according to any one of the technical solutions of the first aspect. Therefore, the wind speed adjustment apparatus possesses all the beneficial technical effects of the wind speed adjustment method according to any one of the technical solutions of the first aspect, and detailed description thereof is omitted here.

The fourth aspect of the present application proposes a computer-readable storage medium, and the computer-readable storage medium stores programs or instructions therein. When the programs or instructions are executed by a processor, the steps of the wind speed adjustment method according to any one of the technical solutions of the first aspect are implemented. Therefore, the computer-readable storage medium possesses all the beneficial technical effects of the wind speed adjustment method according to any one of the technical solutions of the first aspect, and detailed description thereof is omitted here.

The fifth aspect of the present application proposes a fan device, comprising: the wind speed adjustment apparatus according to the second aspect or the third aspect, and/or the computer-readable storage medium according to the fourth aspect. Therefore, the fan device possesses all the beneficial technical effects of the wind speed adjustment apparatus according to the second aspect or the third aspect, and/or the computer-readable storage medium according to the fourth aspect, and detailed description thereof is omitted here.

In some technical solutions, the fan device further comprises: a housing, the housing being provided with an air duct therein; N sensors disposed on the housing and configured to collect N environmental parameters, N being an integer greater than 1; a fan disposed within the housing and communicating with the air duct.

In the technical solutions of the present application, by providing the fan device with multiple sensors, corresponding environmental parameters can be collected, which facilitates subsequent adjustment and control of the target wind speed based on the environmental parameters.

In some technical solutions, the N sensors comprise at least one of the following: a temperature sensor, a humidity sensor, a PM2.5 sensor, a PM10 sensor, a carbon dioxide sensor.

In the technical solutions, an environmental temperature is collected by the temperature sensor, an environmental humidity is collected by the humidity sensor, PM2.5 is collected by the PM2.5 sensor, PM10 is collected by the PM10 sensor, and a carbon dioxide concentration is collected by the carbon dioxide sensor.

The additional aspects and advantages of the present application will become apparent in the following description or may be learned through practice of the present application.

### BRIEF DESCRIPTION OF THE DRAWINGS

The above-mentioned and/or additional aspects and advantages of the present application will become apparent and easily understandable from the description of the embodiments in combination with the following accompanying drawings, wherein:
FIG. 1 is a first flow chart of a wind speed adjustment method proposed in some embodiments of the present application;
FIG. 2 is a structural schematic view of a fan device proposed in some embodiments of the present application;
FIG. 3 is a second flow chart of a wind speed adjustment method proposed in some embodiments of the present application;
FIG. 4 is a first structural block diagram of a wind speed adjustment apparatus proposed in some embodiments of the present application; and
FIG. 5 is a second structural block diagram of a wind speed adjustment apparatus proposed in some embodiments of the present application.

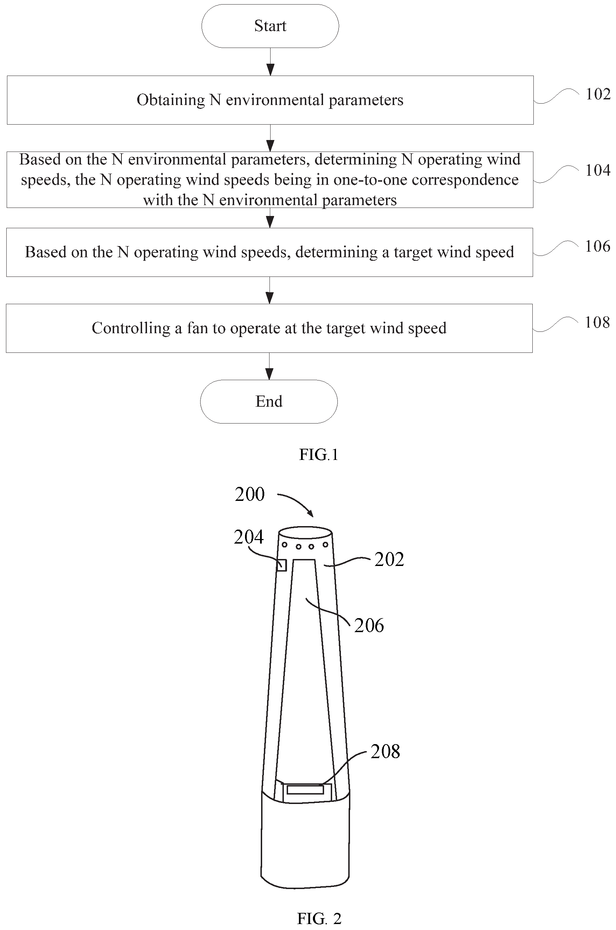

Wherein, the reference signs in FIG. 2 are as follows:
200 fan device, 202 housing, 204 sensor, 206 air duct, 208 fan.

### DETAILED DESCRIPTION OF THE INVENTION

To more clearly understand the above purposes, features and advantages of the present application, the present application will be further detailed hereinafter in combination with the accompanying drawings and embodiments. It should be indicated that in the case of no conflict, the embodiments and the features in the embodiments of the present application can be combined with each other.

Many details are illustrated in the following description for the convenience of a thorough understanding to the present application, but the present application can further be implemented using other embodiments other than these described herein. Therefore, the protection scope of the present application is not limited to the specific embodiments disclosed in the following text.

A wind speed adjustment method and apparatus, a computer-readable storage medium, and a fan device according to some embodiments of the present application are described below with reference to FIG. 1 to FIG. 5.

The wind speed adjustment method proposed according to an embodiment of the present application is applied to the fan device; the fan device comprises N sensors and a fan, the N sensors are configured to collect N environmental parameters, and N is an integer greater than 1. FIG. 1 is a first flow chart of a wind speed adjustment method proposed in some embodiments of the present application. As shown in FIG. 1, a wind speed adjustment method is proposed, comprising:
Step 102: obtaining the N environmental parameters;
In this embodiment, the N environmental parameters are parameters collected by the N sensors in the fan device. The N sensors are arranged in the fan device, and the N sensors are capable of collecting different environmental parameters.

FIG. 2 is a structural schematic view of a fan device proposed in some embodiments of the present application. As shown in FIG. 2, the fan device 200 comprises a housing 202, a fan 208, and N sensors 204. An air duct 206 is provided inside the housing 202, the fan 208 is disposed inside the air duct 206, and the N sensors 204 can be positioned at different locations of the fan device 200.

Exemplarily, the N sensors comprise at least one of the following: a temperature sensor, a humidity sensor, a PM2.5 (particulate matter with a diameter of less than or equal to 2.5 micrometers) sensor, a PM10 (particulate matter with a diameter of less than or equal to 10 micrometers) sensor, and a carbon dioxide sensor.

In the embodiment, the N sensors are connected to a control system of the fan device, and the control system can read the N environmental parameters collected by the N sensors.

Step 104, determining N operating wind speeds based on the N environmental parameters, the N operating wind speeds being in one-to-one correspondence with the N environmental parameters.

In the embodiment, based on the N environmental parameters, N corresponding operating wind speeds can be determined, wherein each environmental parameter corresponds to one operating wind speed.

Step 106: based on the N operating wind speeds, determining a target wind speed.

Exemplarily, the division of operating wind speeds of the fan device can be made based on a minimum rotation speed and a maximum rotation speed. For example, it can be divided into 12 wind speed levels, 24 wind speed levels, 36 wind speed levels, or other numbers of levels, which is detailed below.

Wind speed levels match an environmental temperature. The wind speed levels are set to 24 wind speed levels, and a temperature range collected by a temperature sensor of the fan device is required to be 0°C to 45°C. The 24 wind speed levels are respectively matched one-to-one with temperature intervals within the range of 0°C to 45°C.

Matching between wind speed levels and humidity indicates that the wind speed levels are set to 24 wind speed levels, a humidity range collected by a humidity sensor of the fan device is required to be 1% to 100%, and the 24 wind speed levels are respectively matched one-to-one with the humidity intervals within the range of 1% to 100%.

Matching between the wind speed levels and PM2.5 data indicates that the wind speed levels are set to 24 wind speed levels, a PM2.5 data range collected by a PM2.5 sensor used in a fan is required to be 1 to 999, and the 24 wind speed levels are respectively matched one-to-one with the PM2.5 data intervals within the range of 1 to 999.

Step 108: controlling the fan to operate at the target wind speed.

In this embodiment, after determining the N operating wind speeds corresponding to the N environmental parameters, the target wind speed can be determined based on the N operating wind speeds, and the fan is controlled to operate at the target wind speed.

Specifically, the control system of the fan device can obtain multiple different environmental parameters collected by multiple sensors, determine corresponding different operating wind speeds based on the different environmental parameters, and obtain, after determining multiple operating wind speeds, the target wind speed at which the fan operates by synthesizing the multiple operating wind speeds, so that the fan can operate at an optimal operating wind speed.

In the embodiment of the present application, by arranging multiple sensors on the fan device, when the multiple sensors collect multiple different environmental parameters, the operating wind speed corresponding to each environmental parameter can be determined, and the target wind speed of the fan is determined by synthesizing the multiple operating wind speeds. This allows the fan to take into account the environmental parameters collected by the multiple sensors, thereby enabling the fan device to take into account the control needs of multiple different functions and ensuring that the fan operates at a favorable operating wind speed.

In some embodiments, determining the target wind speed based on the N operating wind speeds comprises:
extracting M first wind speeds from the N operating wind speeds based on a numerical relationship among the N operating wind speeds, wherein M=N-2; and
determining the target wind speed based on the M first wind speeds.

In the embodiments, after obtaining the N operating wind speeds, numerical comparison is performed on the N operating wind speeds to determine the numerical relationship among the N operating wind speeds. The numerical relationship comprises a magnitude relationship of the N operating wind speeds, etc. Based on this numerical relationship, the M first wind speeds are extracted from the N operating wind speeds, and the final target wind speed is then determined based on the M first wind speeds.

It should be noted that N is a positive integer greater than 3.

Exemplarily, if the number of the operating wind speeds is 5, then the number of first wind speeds is 3. The average value of the 3 first wind speeds is calculated, and a calculation result is determined as the target wind speed.

In the embodiments of the present application, by extracting the first wind speeds from the multiple operating wind speeds and determining the target wind speed based on the extracted first wind speeds, a wind speed that deviates significantly from the first wind speeds among the multiple operating wind speeds can be removed. This improves matching between the generated target wind speed and the environmental parameters collected by the multiple sensors, and further ensures that the fan device can take into account multiple different environmental parameters when controlling the wind speed.

In some embodiments, extracting the M first wind speeds from the N operating wind speeds based on the numerical relationship among the N operating wind speeds comprises: determining a maximum wind speed and a minimum wind speed among the N operating wind speeds based on the numerical relationship among the N operating wind speeds; removing the maximum wind speed and the minimum wind speed to obtain the M first wind speeds.

In the embodiments, through the numerical relationship among the N operating wind speeds, the maximum wind speed and the minimum wind speed among the N operating wind speeds can be determined; the maximum wind speed and the minimum wind speed are then removed from the N operating wind speeds, thereby obtaining the M first wind speeds among the N operating wind speeds.

Exemplarily, a wind speed level matching the environmental temperature is level 10, a wind speed level matching an environmental humidity is level 12, a wind speed level matching a PM2.5 parameter is level 10, a wind speed level matching a PM10 parameter is level 10, and a wind speed level of a carbon dioxide concentration parameter is level 5. The maximum wind speed level 12 and the minimum wind speed level 5 are removed, and the average value of the wind speeds corresponding to the remaining three wind speed levels is calculated to obtain a target wind speed of level 10.

In the embodiments of the present application, by removing the maximum wind speed and the minimum wind speed from the N operating wind speeds, the accuracy of extracting the M first wind speeds from the N operating wind speeds can be improved, resulting in smaller differences among the extracted M first wind speeds, thereby further enhancing the matching between the target wind speed generated based on the M first wind speeds and the multiple environmental parameters.

In some embodiments, determining the target wind speed based on the N operating wind speeds comprises:
determining P first parameters among the N environmental parameters, the first parameters being within a preset parameter range, P being a positive integer;
determining Q third wind speeds among the N operating wind speeds based on the N environmental parameters and the P first parameters, wherein Q= N-P; and
determining the target wind speed based on the Q third wind speeds.

In the embodiments, the first parameters are parameters in the environmental parameters that fall within a preset parameter range. The preset parameter range is a target parameter range set by the user. That is, if the first parameters are within the preset parameter range, it can be determined that no further adjustment is needed for the parameters. Therefore, the P first parameters are removed from the N environmental parameters to obtain the Q third parameters, and the operating wind speeds corresponding to the Q third parameters are determined as Q third wind speeds.

Exemplarily, the N environmental parameters comprise an environmental temperature, an environmental humidity, PM2.5, PM10, and a carbon dioxide concentration. Wherein, if the environmental temperature is within a preset temperature range and the PM2.5 is within a preset PM2.5 range, then the environmental temperature and PM2.5 are removed. The target wind speed is then determined based on the operating wind speeds corresponding to the collected environmental humidity, PM10, and carbon dioxide concentration.

In the embodiments, after obtaining the Q third wind speeds, an average value of the Q third wind speeds is calculated, and a calculated average wind speed value is determined as the target wind speed.

Exemplarily, the wind speed level matching the environmental temperature is level 10, the wind speed level matching the environmental humidity is level 12, the wind speed level matching the PM2.5 is level 4, the wind speed level matching the PM10 is level 2, and the wind speed level matching the carbon dioxide concentration is level 3. That is, under conditions of good air quality (i.e., the PM2.5, PM10, and carbon dioxide concentration are within respective preset parameter ranges), the system automatically discards the wind speed levels matching air quality data. The wind speed levels matching the environmental temperature and the environmental humidity are determined as the third wind speeds. The average value of two third wind speeds is calculated to obtain the target wind speed of level 11.

In the embodiments of the present application, the P first parameters among the N environmental parameters that are within the preset parameter range are removed, leaving only the Q third parameters; the target wind speed is generated based on the Q third wind speeds corresponding to the Q third parameters. This allows the fan device to set the target wind speed by synthesizing only the environmental parameters that are not within the preset parameter range, avoiding interference of the environmental parameters already within the preset parameter range with determining the target wind speed, thereby improving the matching of operation at the target wind speed to the environmental parameters that are not within the preset parameter range.

In some embodiments, determining the target wind speed based on the N operating wind speeds comprises:
obtaining N weight coefficients corresponding to the N environmental parameters; and
performing weighted average value calculation on the N operating wind speeds based on the N weight coefficients to obtain the target wind speed.

In the embodiments, the N environmental parameters correspond to the N weight coefficients, wherein, the N weight coefficients are associated with an operation mode set by the user or a default operation mode of the control system.

It should be noted that the weight coefficients may be default weight coefficients of the control system, or may be set by the user for different environmental parameters based on actual needs.

Exemplarily, if the user sets a mode to a temperature adjustment mode, the weight coefficient for the environmental temperature is set to be relatively high, while the weight coefficients for other environmental parameters are set to be relatively low.

Exemplarily, if the user sets the mode to a humidity adjustment mode, the weight coefficient for the environmental humidity is set to be relatively high, while the weight coefficients for other environmental parameters are set to be relatively low.

In the embodiments, after determining the N weight coefficients, weighted average value calculation is performed on the N operating wind speeds through the N weight coefficients, and a calculated result is determined as the target wind speed.

Exemplarily, the value of the weight coefficients ranges from 0 to 99%.

Exemplarily, the wind speed level matching the environmental temperature is level 15, the wind speed level matching the environmental humidity is level 12, the wind speed level matching PM2.5 is level 6, the wind speed level matching PM10 is level 2, and the wind speed level of the carbon dioxide concentration is level 3. Wherein, the weight coefficient corresponding to the environmental temperature is 30%, the weight coefficient corresponding to the environmental humidity is 20%, the weight coefficient corresponding to the PM2.5 is 25%, the weight coefficient corresponding to the PM10 is 15%, and the weight coefficient corresponding to the carbon dioxide concentration is 10%. The target wind speed is calculated using the following formula (1): 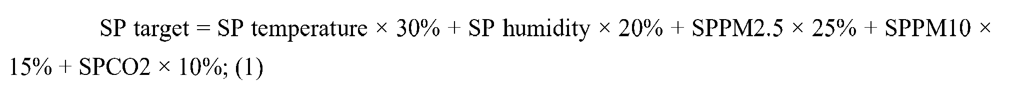
SP target = SP temperature × 30% + SP humidity × 20% + SPPM2.5 × 25% + SPPM10 × 15% + SPCO2 × 10%; (1)
wherein, the SP target is the target wind speed, the SP temperature is the operating wind speed corresponding to environmental temperature, the SP humidity is the operating wind speed corresponding to the environmental humidity, SPPM2.5 is the operating wind speed corresponding to the PM2.5, the SPPM10 is the operating wind speed corresponding to the PM10, and the SPCO₂ is the operating wind speed corresponding to the carbon dioxide concentration.

In the embodiments of the present application, when the fan operates in a preset operation mode, N weight coefficients correspondingly configured for the N environmental parameters in the preset operation mode are obtained, then weighted average value calculation is performed on the N operating wind speeds through N weight coefficients to calculate the target wind speed, so that the finally obtained target wind speed matches the operation mode in which the fan device is operating.

In some embodiments, determining the target wind speed based on the N operating wind speeds comprises:
in response to a mode setting instruction, determining X second parameters among the N environmental parameters, wherein X is a positive integer;
determining X fourth wind speeds among the N operating wind speeds based on the X second parameters, and the X fourth wind speeds being in one-to-one correspondence with the X second parameters; and
determining the target wind speed based on the X fourth wind speeds.

In the embodiments, the mode setting instruction is configured to set the operation mode of the fan device. Different operation modes correspond to different X second parameters among the N environmental parameters. The X fourth wind speeds among the N operating wind speeds can be determined through the X second parameters, and then the target wind speed is generated based on the X fourth wind speeds.

It should be noted that the number of the second parameters corresponding to different operation modes may be the same or different, and the second parameters corresponding to different operation modes may be the same environmental parameters or different environmental parameters.

Exemplarily, the environmental parameters comprise: the environmental temperature, the environmental humidity, the PM2.5, the PM10, and the carbon dioxide concentration. In the temperature and humidity adjustment modes, the X second parameters comprise the environmental humidity and the environmental temperature. In an air purification mode, the X second parameters comprise the PM2.5, the PM10, and the carbon dioxide concentration.

In the embodiments of the present application, based on the mode setting instruction, the operation mode of the fan device set by the user can be determined, and based on this operation mode, the X second parameters among the N environmental parameters can be determined. The target wind speed is calculated based on the X fourth wind speeds corresponding to the X second parameters, thereby improving the matching with the operation mode set by the user.

In some embodiments, determining the target wind speed based on the X fourth wind speeds comprises: determining the maximum value or the average value of the X fourth wind speeds as the target wind speed.

In the embodiments, since the X fourth wind speeds are the operating wind speeds corresponding to the X second parameters, and the X second parameters match the operation mode set by the user, the maximum value or the average value of the X fourth wind speeds can be selected as the target wind speed, thereby improving the matching between the target wind speed and the operation mode.

Exemplarily, the user sets, via an application or a control panel of the fan device, deriving an optimal wind speed level based on air quality data. That is, the control system automatically removes the wind speed level matching the environmental temperature and the wind speed level matching the environmental humidity, and derives the optimal wind speed level through the air quality data. For example, the wind speed level matching the PM2.5 is level 10, the wind speed level matching the PM10 is level 12, and the wind speed level of the carbon dioxide concentration parameter is level 5. For example, the system determines the target wind speed level as level 12, i.e., the highest wind speed level is configured to accelerate air purification. For another example, the system determines the target wind speed level as level 9, i.e., an average level of the wind speed level matching the PM2.5, the wind speed level matching the PM10, and the wind speed level of the carbon dioxide concentration parameter.

In the embodiments of the present application, by selecting the maximum value or the average value of the X fourth wind speeds as the target wind speed, the matching between the target wind speed and the operation mode is improved.

In some embodiments, determining the N operating wind speeds based on the N environmental parameters comprises:
obtaining N wind speed mapping relationships corresponding to the N environmental parameters; and
determining the N operating wind speeds based on the N environmental parameters and the N wind speed mapping relationships.

In the embodiments, different environmental parameters correspond to different wind speed mapping relationships. After obtaining the N environmental parameters, the corresponding N operating wind speeds can be obtained through the N wind speed mapping relationships, thereby determining the operating wind speeds corresponding to the different environmental parameters.

In the embodiments of the present application, by setting different wind speed mapping relationships for different environmental parameters, the accuracy of the operating wind speed determined for each different environmental parameter, and the disparity among the N operating wind speeds determined by the N environmental parameters can be ensured, thus further improving the matching between the target wind speed and the multiple environmental parameters.

In some embodiments, the N environmental parameters comprise at least one of the following: the environmental temperature, the environmental humidity, the PM2.5, the PM10, and the carbon dioxide concentration.

In the embodiments, the N sensors comprise at least one of the following: a temperature sensor, a humidity sensor, a PM2.5 sensor, a PM10 sensor, and a carbon dioxide sensor.

Wherein, the environmental temperature is collected by the temperature sensor, the environmental humidity is collected by the humidity sensor, the PM2.5 is collected by the PM2.5 sensor, the PM10 is collected by the PM10 sensor, and the carbon dioxide concentration is collected by the carbon dioxide sensor.

In the embodiments of the present application, by collecting the corresponding environmental parameters using the corresponding sensors, the accuracy of the obtained N environmental parameters can be improved, thereby improving the accuracy of determining the target wind speed.

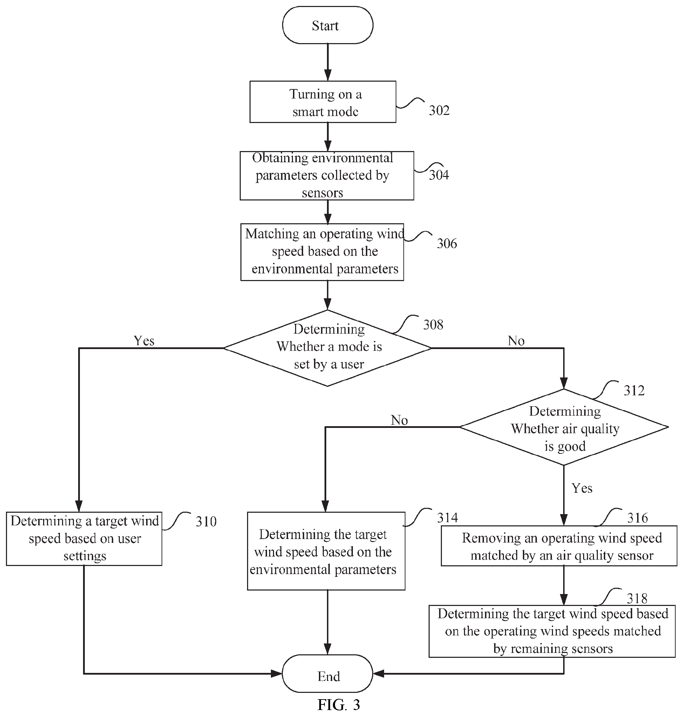

FIG. 3 is a second flow chart of a wind speed adjustment method proposed in some embodiments of the present application. As shown in FIG. 3, a wind speed adjustment method is proposed, comprising:
Step 302, turning on a smart mode;
Step 304, obtaining environmental parameters collected by sensors;
Step 306, matching an operating wind speed based on the environmental parameters;
Step 308, determining whether a mode is set by a user; if a determination result is yes, executing Step 310; if the determination result is no, executing Step 312;
Step 310, determining a target wind speed based on user settings;
In the embodiment, upon receiving a mode setting instruction from the user, X second parameters among the N environmental parameters are determined, and the target wind speed is determined based on X fourth wind speeds corresponding to the X second parameters.

Step 312, determining whether air quality is good; if a determination result is no, executing Step 314; if the determination result is yes, executing Step 316;
Step 314, determining the target wind speed based on the environmental parameters;
In the embodiment, a maximum wind speed and a minimum wind speed among the N operating wind speeds are removed, and an average value of the remaining operating wind speeds is calculated as the target wind speed.

In the embodiment, N weight coefficients corresponding to the N operating wind speeds are obtained, and weighted average value calculation is performed on the N operating wind speeds through the N weight coefficients to obtain the target wind speed.

Step 316, removing an operating wind speed matched by an air quality sensor; and
Step 318, determining the target wind speed based on the operating wind speeds matched by the remaining sensors.

In the embodiment, after removing the operating wind speed matched by the air quality sensor, the average value of the remaining operating wind speeds is calculated as the target wind speed.

The above methods can be implemented in various different ways depending on specific features and/or exemplary applications. For example, these methods may be implemented through a combination of hardware, firmware, and/or software. For instance, in a hardware implementation, a processor may be implemented in one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, electronic devices, other device units for performing the above functions, and/or combinations thereof.

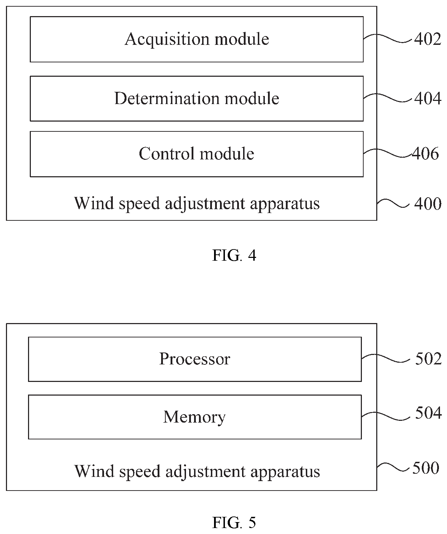

An embodiment of the present application proposes a wind speed adjustment apparatus, which is applied to a fan device. The fan device comprises N sensors and a fan. The N sensors are configured to collect N environmental parameters, and N is an integer greater than 1. FIG. 4 is a first structural block diagram of a wind speed adjustment apparatus proposed in some embodiments of the present application. As shown in FIG. 4, a wind speed adjustment apparatus 400 comprises:
an acquisition module 402 for obtaining the N environmental parameters;
a determination module 404 for determining N operating wind speeds based on the N environmental parameters, the N operating wind speeds being in one-to-one correspondence with the N environmental parameters;
the determination module 404 being configured to determine a target wind speed based on the N operating wind speeds; and
a control module 406 for controlling the fan to operate at the target wind speed.

In the embodiments of the present application, by providing the fan device with multiple sensors, when the multiple sensors collect multiple different environmental parameters, the operating wind speed corresponding to each environmental parameter can be determined, and the target wind speed of the fan is determined by synthesizing multiple operating wind speeds. This allows the fan to take into account the environmental parameters collected by the multiple sensors, thereby enabling the fan device to take into account the control needs of multiple different functions and ensuring that the fan operates at a favorable operating wind speed.

In some embodiments, the wind speed adjustment apparatus 400 comprises:
an extraction module for extracting M first wind speeds from the N operating wind speeds based on a numerical relationship among the N operating wind speeds, wherein M=N-2; and
the determination module 404 for determining the target wind speed based on the M first wind speeds.

In the embodiments, after obtaining the N operating wind speeds, numerical comparison is performed on the N operating wind speeds to determine the numerical relationship among the N operating wind speeds. The numerical relationship comprises a magnitude relationship of the N operating wind speeds, etc. Based on this numerical relationship, the M first wind speeds are extracted from the N operating wind speeds, and the final target wind speed is then determined based on the M first wind speeds.

It should be noted that N is a positive integer greater than 3.

In the embodiments of the present application, by extracting the first wind speeds from the multiple operating wind speeds and determining the target wind speed based on the extracted first wind speeds, a wind speed that deviates significantly from the first wind speeds among the multiple operating wind speeds can be removed. This improves matching between the generated target wind speed and the environmental parameters collected by the multiple sensors, and further ensures that the fan device can take into account multiple different environmental parameters when controlling the wind speed.

In some embodiments, the determination module 404 is configured to determine the maximum wind speed and the minimum wind speed among the N operating wind speeds based on the numerical relationship among the N operating wind speeds.

The wind speed adjustment apparatus 400 comprises:
a deletion module for deleting the maximum wind speed and the minimum wind speed to obtain M first wind speeds.

In the embodiments, through the numerical relationship among the N operating wind speeds, the maximum wind speed and the minimum wind speed among the N operating wind speeds can be determined; the maximum wind speed and the minimum wind speed are then removed from the N operating wind speeds, thereby obtaining the M first wind speeds among the N operating wind speeds.

In the embodiments of the present application, by removing the maximum wind speed and the minimum wind speed from the N operating wind speeds, the accuracy of extracting the M first wind speeds from the N operating wind speeds can be improved, resulting in smaller differences among the extracted M first wind speeds, thereby further enhancing the matching between the target wind speed generated based on the M first wind speeds and the multiple environmental parameters.

In some embodiments, the determination module 404 is configured to determine P first parameters from the N environmental parameters, wherein the first parameters are within a preset parameter range, and P is a positive integer;
the determination module 404 is configured to determine Q third wind speeds from the N operating wind speeds based on the N environmental parameters and the P first parameters, wherein Q = N - P; and
the determination module 404 is configured to determine the target wind speed based on the Q third wind speeds.

In the embodiments, the first parameters are parameters in the environmental parameters that fall within a preset parameter range. The preset parameter range is a target parameter range set by the user. That is, if the first parameters are within the preset parameter range, it can be determined that no further adjustment is needed for the parameters. Therefore, the P first parameters are removed from the N environmental parameters to obtain the Q third parameters, and the operating wind speeds corresponding to the Q third parameters are determined as Q third wind speeds.

In the embodiments, after obtaining the Q third wind speeds, an average value of the Q third wind speeds is calculated, and a calculated average wind speed value is determined as the target wind speed.

In the embodiments of the present application, the P first parameters among the N environmental parameters that are within the preset parameter range are removed, leaving only the Q third parameters; the target wind speed is generated based on the Q third wind speeds corresponding to the Q third parameters. This allows the fan device to set the target wind speed by synthesizing only the environmental parameters that are not within the preset parameter range, avoiding interference of the environmental parameters already within the preset parameter range with determining the target wind speed, thereby improving the matching of operation at the target wind speed to the environmental parameters that are not within the preset parameter range.

In some embodiments, the acquisition module 402 is configured to obtain N weight coefficients corresponding to the N environmental parameters; and
the wind speed adjustment apparatus 400 comprises:
a calculation module for performing weighted average value calculation on the N operating wind speeds based on the N weight coefficients to obtain the target wind speed.

In the embodiments, the N environmental parameters correspond to the N weight coefficients, wherein, the N weight coefficients are associated with an operation mode set by the user or a default operation mode of the control system.

It should be noted that the weight coefficients may be default weight coefficients of the control system, or may be set by the user for different environmental parameters based on actual needs.

In the embodiments, after determining the N weight coefficients, weighted average value calculation is performed on the N operating wind speeds through the N weight coefficients, and a calculated result is determined as the target wind speed.

In the embodiments of the present application, when the fan operates in a preset operation mode, N weight coefficients correspondingly configured for the N environmental parameters in the preset operation mode are obtained, then weighted average value calculation is performed on the N operating wind speeds through N weight coefficients to calculate the target wind speed, so that the finally obtained target wind speed matches the operation mode in which the fan device is operating.

In some embodiments, the determination module 404 is configured to determine X second parameters among the N environmental parameters in response to a mode setting instruction, wherein X is a positive integer;
the determination module 404 is configured to determine X fourth wind speeds among the N operating wind speeds based on the X second parameters, and the X fourth wind speeds are in one-to-one correspondence with the X second parameters; and
the determination module 404 is configured to determine the target wind speed based on the X fourth wind speeds.

In the embodiments, the mode setting instruction is configured to set the operation mode of the fan device. Different operation modes correspond to different X second parameters among the N environmental parameters. The X fourth wind speeds among the N operating wind speeds can be determined through the X second parameters, and then the target wind speed is generated based on the X fourth wind speeds.

It should be noted that the number of the second parameters corresponding to different operation modes may be the same or different, and the second parameters corresponding to different operation modes may be the same environmental parameters or different environmental parameters.

In the embodiments of the present application, based on the mode setting instruction, the operation mode of the fan device set by the user can be determined, and based on this operation mode, the X second parameters among the N environmental parameters can be determined. The target wind speed is calculated based on the X fourth wind speeds corresponding to the X second parameters, thereby improving the matching with the operation mode set by the user.

In some embodiments, the determination module 404 is configured to determine the maximum value or the average value of the X fourth wind speeds as the target wind speed.

In the embodiments, since the X fourth wind speeds are the operating wind speeds corresponding to the X second parameters, and the X second parameters match the operation mode set by the user, the maximum value or the average value of the X fourth wind speeds can be selected as the target wind speed, thereby improving the matching between the target wind speed and the operation mode.

In the embodiments of the present application, by selecting the maximum value or the average value of the X fourth wind speeds as the target wind speed, the matching between the target wind speed and the operation mode is improved.

In some embodiments, the acquisition module 402 is configured to obtain N wind speed mapping relationships corresponding to the N environmental parameters; and
the determination module 404 is configured to determine the N operating wind speeds based on the N environmental parameters and the N wind speed mapping relationships.

In the embodiments, different environmental parameters correspond to different wind speed mapping relationships. After obtaining the N environmental parameters, the corresponding N operating wind speeds can be obtained through the N wind speed mapping relationships, thereby determining the operating wind speeds corresponding to the different environmental parameters.

In the embodiments of the present application, by setting different wind speed mapping relationships for different environmental parameters, the accuracy of the operating wind speed determined for each different environmental parameter, and the disparity among the N operating wind speeds determined by the N environmental parameters can be ensured, thus further improving the matching between the target wind speed and the multiple environmental parameters.

In some embodiments, the N environmental parameters comprise at least one of the following: the environmental temperature, the environmental humidity, the PM2.5, the PM10, and the carbon dioxide concentration.

In the embodiments, the N sensors comprise at least one of the following: a temperature sensor, a humidity sensor, a PM2.5 sensor, a PM10 sensor, and a carbon dioxide sensor.

Wherein, the environmental temperature is collected by the temperature sensor, the environmental humidity is collected by the humidity sensor, the PM2.5 is collected by the PM2.5 sensor, the PM10 is collected by the PM10 sensor, and the carbon dioxide concentration is collected by the carbon dioxide sensor.

In the embodiments of the present application, by collecting the corresponding environmental parameters using the corresponding sensors, the accuracy of the obtained N environmental parameters can be improved, thereby improving the accuracy of determining the target wind speed.

In an embodiment of the present application, FIG. 5 is a second structural block diagram of a wind speed adjustment apparatus proposed in some embodiments of the present application. As shown in FIG. 5, a wind speed adjustment apparatus 500 is proposed, comprising: a memory 504 having programs or instructions stored therein; and a processor 502, the processor 502 executing the programs or instructions stored in the memory 504 to implement the steps of the wind speed adjustment method according to any one of the embodiments. Therefore, the wind speed adjustment apparatus possesses all the beneficial technical effects of the wind speed adjustment method according to any one of the embodiments, and detailed description thereof is omitted here.

According to an embodiment of the present application, a computer-readable storage medium is proposed, and the computer-readable storage medium stores programs or instructions therein. When the programs or instructions are executed by a processor, the steps of the wind speed adjustment method according to any one of the technical solutions are implemented. Therefore, the computer-readable storage medium possesses all the beneficial technical effects of the wind speed adjustment method according to any one of the technical solutions, and detailed description thereof is omitted here.

A computer-readable storage medium may be a tangible device that can retain and store instructions for use by an instruction execution device. The computer-readable storage medium may be, but is not limited to, an electronic storage device, a magnetic storage device, an optical storage device, an electromagnetic storage device, a semiconductor storage device, or any appropriate combinations of the foregoing. A non-exhaustive list of more specific examples of the computer-readable storage medium comprises: a portable computer floppy disk, a hard disk, a random access memory (RAM), a read-only memory (ROM), an erasable programmable read-only memory (EPROM or flash memory), a static random access memory (SRAM), a portable compact disc read-only memory (CD-ROM), a digital versatile disc (DVD), a storage card, a floppy disk, an encoding mechanical device (such as punch cards or grooves comprising protruding structures which record instructions), and any appropriate combinations of the foregoing. The computer-readable storage medium as used herein shall not be construed as transitory signals per se, such as radio waves or other freely propagating electromagnetic waves, electromagnetic waves propagating through a waveguide or other transmission media, or electrical signals transmitted through wires, etc.

According to an embodiment of the present application, a fan device is proposed, comprising: the wind speed adjustment apparatus according to any one of the above embodiments, and/or the computer-readable storage medium according to any one of the above embodiments. Therefore, the fan device possesses all the beneficial technical effects of the wind speed adjustment apparatus according to any one of the above embodiments, and/or the computer-readable storage medium according to any one of the above embodiments, and detailed description thereof is omitted here.

As shown in FIG. 2, in some embodiments, the fan device 200 further comprises: a housing 202, the housing 202 being provided with an air duct 206 therein; N sensors 204 disposed on the housing 202 and configured to collect N environmental parameters, N being an integer greater than 1; a fan 208 disposed within the housing 202 and communicating with the air duct 206.

In the embodiments of the present application, by providing the fan device 200 with multiple sensors 204, corresponding environmental parameters can be collected, which facilitates subsequent adjustment and control of the target wind speed based on the environmental parameters.

In some embodiments, the N sensors comprise at least one of the following: a temperature sensor, a humidity sensor, a PM2.5 sensor, a PM10 sensor, a carbon dioxide sensor.

In the embodiments, an environmental temperature is collected by the temperature sensor, an environmental humidity is collected by the humidity sensor, PM2.5 is collected by the PM2.5 sensor, PM10 is collected by the PM10 sensor, and a carbon dioxide concentration is collected by the carbon dioxide sensor.

In the embodiments of the present application, by collecting the corresponding environmental parameters using the corresponding sensors, the accuracy of the obtained N environmental parameters can be improved, thereby improving the accuracy of determining the target wind speed.

In the description of the present application, the term of "a plurality of" indicates two or more than two, unless otherwise explicitly defined. The orientations or positional relationships indicated by terms "upper", "lower", and the like are based on the orientations or positional relationships shown in the accompanying drawings, and are merely for the convenience of describing the present application and simplifying the description, and do not indicate or imply that the described devices or elements must have a particular orientation, or be constructed or operated in a particular orientation. Therefore, they should not be construed as limitations on the present application. Terms such as "mount", "connect with", and "fix" shall be understood in a broad sense. For example, "connect with" may refer to a fixed connection, a detachable connection, or an integral connection, and may further refer to a direct connection or an indirect connection through an intermediate medium. For those of ordinary skill in the art, the specific meanings of the above terms in the present application can be understood based on specific circumstances.

In the description of the present application, the description of the terms of "an embodiment", "some embodiments", "specific embodiment" and the like is intended to mean that the specific features, structures, materials or characteristics described in combination with the embodiments or examples are comprised in at least one embodiment or example of the present application. In the present application, the illustrative expression of the above terms may not indicate the same embodiment or example. In addition, the described specific features, structures, materials or characteristics may be combined with each other in an appropriate method in one or more of any embodiments or examples.

The above-mentioned are merely some embodiments of the present application and are not intended to limit the present application, and for one skilled in the art, various modifications and changes may be made to the present application. Any modifications, equivalent substitutions, improvements should be covered within the scope of protection of the present application.

## Claims

1. A wind speed adjustment method, applied to a fan device, wherein the fan device comprises N sensors and a fan, the N sensors being configured to collect N environmental parameters, N being an integer greater than 1, and the wind speed adjustment method comprises:
obtaining the N environmental parameters;
determining N operating wind speeds based on the N environmental parameters, the N operating wind speeds being in one-to-one correspondence with the N environmental parameters;
determining a target wind speed based on the N operating wind speeds; and
controlling the fan to operate at the target wind speed.

2. The wind speed adjustment method according to claim 1, wherein said determining a target wind speed based on the N operating wind speeds comprises:
extracting M first wind speeds from the N operating wind speeds based on a numerical relationship among the N operating wind speeds, wherein M=N-2; and
determining the target wind speed based on the M first wind speeds.

3. The wind speed adjustment method according to claim 2, wherein, said extracting M first wind speeds from the N operating wind speeds based on a numerical relationship among the N operating wind speeds comprises:
determining a maximum wind speed and a minimum wind speed among the N operating wind speeds based on the numerical relationship among the N operating wind speeds; and
removing the maximum wind speed and the minimum wind speed to obtain the M first wind speeds.

4. The wind speed adjustment method according to claim 1, wherein, said determining a target wind speed based on the N operating wind speeds comprises:
determining P first parameters among the N environmental parameters, the first parameters being within a preset parameter range, P being a positive integer;
determining Q third wind speeds among the N operating wind speeds based on the N environmental parameters and the P first parameters, wherein Q = N - P; and
determining the target wind speed based on the Q third wind speeds.

5. The wind speed adjustment method according to claim 1, wherein, said determining a target wind speed based on the N operating wind speeds comprises:
obtaining N weight coefficients corresponding to the N environmental parameters; and
performing weighted average value calculation on the N operating wind speeds based on the N weight coefficients to obtain the target wind speed.

6. The wind speed adjustment method according to claim 1, wherein, said determining a target wind speed based on the N operating wind speeds comprises:
in response to a mode setting instruction, determining X second parameters among the N environmental parameters, X being a positive integer;
determining X fourth wind speeds among the N operating wind speeds based on the X second parameters, the X fourth wind speeds being in one-to-one correspondence with the X second parameters; and
determining the target wind speed based on the X fourth wind speeds.

7. The wind speed adjustment method according to claim 6, wherein, said determining the target wind speed based on the X fourth wind speeds comprises:
determining a maximum value or an average value of the X fourth wind speeds as the target wind speed.

8. The wind speed adjustment method according to any one of claim 1 to claim 7, wherein said determining N operating wind speeds based on the N environmental parameters comprises:
obtaining N wind speed mapping relationships corresponding to the N environmental parameters; and
determining the N operating wind speeds based on the N environmental parameters and the N wind speed mapping relationships.

9. The wind speed adjustment method according to any one of claims 1 to 7, wherein the N environmental parameters comprise at least one of the following:
an environmental temperature, an environmental humidity, PM2.5, PM10, and a carbon dioxide concentration.

10. A wind speed adjustment apparatus, applied to a fan device, wherein the fan device comprises N sensors and a fan, the N sensors being configured to collect N environmental parameters, N being an integer greater than 1, and the wind speed adjustment apparatus comprises:
an acquisition module, configured to obtaining the N environmental parameters;
a determination module, configured to determine N operating wind speeds based on the N environmental parameters, the N operating wind speeds being in one-to-one correspondence with the N environmental parameters;
the determination module, configured to determine a target wind speed based on the N operating wind speeds; and
a control module, configured to control the fan to operate at the target wind speed.

11. A wind speed adjustment apparatus, comprising a processor and a memory having stored thereon programs or instructions executable on the processor, wherein the programs or instructions, when executed by the processor, implement the steps of the wind speed adjustment method according to any one of claims 1 to 9.

12. A computer-readable storage medium, having programs or instructions stored thereon, wherein the programs or instructions, when executed by a processor, implement the steps of the wind speed adjustment method according to any one of claims 1 to 9.

13. A fan device, comprising:
the wind speed adjustment apparatus according to claim 10 or 11; and/or
the computer-readable storage medium according to claim 12.

14. The fan device according to claim 13, further comprising:
a housing, the housing being provided with an air duct therein;
N sensors disposed on the housing and configured to collect N environmental parameters, N being an integer greater than 1; and
a fan disposed within the housing and in communication with the air duct.

15. The fan device according to claim 14, wherein the N sensors comprise at least one of the following:
a temperature sensor, a humidity sensor, a PM2.5 sensor, a PM10 sensor, and a carbon dioxide sensor.
